# EUROPEAN PATENT SPECIFICATION

(11) **EP 4 296 046 B1**
(45) Date of publication and mention of the grant of the patent: **30.09.2026**
(21) Application number: 22180624.3
(22) Date of filing: 23.06.2022
(51) Int. Cl.: B29D 99/00, B29C 70/44, B29C 70/54, B29C 33/12, B29C 70/86, B29C 70/76, B29C 65/00, B29C 65/50, B29C 33/00, B29C 65/48, B29L 31/08, F03D 1/06

(54) **CO-INFUSION OF A WIND TURBINE BLADE GLUE FLANGE**
CO-INFUSION DES KLEBEFLANSCHES EINER WINDKRAFTSCHAUFEL
CO-INFUSION D'UNE BRIDE ADHÉSIVE DE PALE D'ÉOLIENNE

(43) Date of publication of application: 27.12.2023
(73) Proprietor: LM Wind Power A/S, 6000 Kolding (DK)
(72) Inventor: BERKEL, Alex, 6000 Kolding (DK)
(74) Representative: COPA Copenhagen Patents

(56) References cited:
- EP-A1- 2 783 840
- US-A1- 2019 232 571
- US-A1- 2022 145 850

## Description

### Field of the invention

The invention relates to a method and system for manufacturing a composite wind turbine blade shell.

### Background of the invention

Wind turbine blades made of fibre-reinforced polymer and in particular the aerodynamic wind turbine blade shells are usually manufactured using two moulds. A first blade shell part, such as a suction side part, and a second blade shell part, such as a pressure side part, of the blade are manufactured separately by arranging glass fibre mats and/or other reinforcement material, such as carbon fibre material and fibre pultrusions, in each of the two moulds. After manufacturing the blade shell parts, the two parts are glued together, often by means of an internal glue flange. Glue is applied to the glue flange and/or to an inner face of a second blade shell part before the second blade shell part is lowered in order to be assembled with the first blade shell part. Additionally, one, two or more reinforcing profiles, such as shear webs or beams, are often attached to the inside of the first blade shell part prior to gluing the first blade shell part to the second blade shell part. The glue joints bonding different parts together in a wind turbine blade are known to represent somewhat weak points in the structural integrity of wind turbine blades. As wind turbine blades increase in size, it is increasingly complicated to manufacture wind turbine blades with the required structural integrity, including the integrity of glue joints between the blade shell parts.

Accordingly, there is a need to ensure that glue joints provided by internal glue flanges provide as much structural strength to the blade as possible.

Patent application publication US 2022/145850 A1 discloses an upwind side shell part and the downwind side part are bonded together along at least one joint. At said at least one joint, the upwind side shall part and the downwind side shell part are bonded at an internal glue flange as well as at an external glue flange. The glue flange can be produced by using a mould insert along which the glue flange is laminated.

Patent application publication EP 2783840 A1 discloses a method of manufacturing a composite structure comprising: providing a mould having an inner surface with a close to vertical portion, placing a fibre layer on the mould inner surface on the close to vertical portion and arranging one or more clamping elements on top of the fibre layer with the close to vertical portion such that the clamping elements create a pressing force on the fibre layer against the mould. The method further comprises removing the clamping elements, placing a new fibre layer overlying a previous fibre layer and arranging the clamping elements on top of the new fibre layer.

Patent application publication US 2019/232571 A1 discloses a wind turbine blade and a method of manufacturing a wind turbine blade, wherein the wind turbine blade is manufactured as a composite structure comprising a reinforcement material embedded in a polymer matrix, the method comprising: providing a first blade mould with a first blade shell part having a leading edge, a trailing edge, and a first leading edge glue surface at the leading edge, the first blade mould comprising a first leading edge flange; providing a second blade mould with a second blade shell part having a leading edge, a trailing edge, and a second leading edge glue surface at the leading edge, the second blade mould comprising a second leading edge flange; applying glue to a leading edge glue surface; providing one or more leading edge spacer elements at a leading edge flange; arranging the second blade mould on the first blade mould, such that the one or more leading edge spacer elements are arranged between the first leading edge flange and the second leading edge flange; applying a pressure to the second blade shell part; and curing the glue.

### Summary of the invention

The above issues are mitigated by embodiments disclosed herein.

The invention provides a method of manufacturing a wind turbine blade shell comprising a first wind turbine blade shell part and a second wind turbine blade shell part. The method comprises:
- providing a blade mould for forming the first blade shell part,
- arranging fibre-reinforcement material into the blade mould,
- providing a first set of one or more fixtures at corresponding one or more fixture positions along a first edge of the blade mould,
- arranging a first premanufactured glue flange in the blade mould using the first set of fixtures as position references, whereby the first glue flange is arranged in a first position relative to the blade mould,
- providing a vacuum bag over the blade mould so as to form a mould cavity, wherein the fibre-reinforcement material, the first glue flange, and the first set of fixtures are contained within the mould cavity,
- evacuating air from the mould cavity,
- providing resin into the mould cavity, and
- curing the resin, thereby forming the first blade shell part.

Methods in accordance with the invention allow for relatively easy preparation of a mould with fibre-reinforcement material and a glue flange, while ensuring that when evacuating air in preparation for providing (infusing) resin into the mould cavity, the glue flange is positioned correctly before being co-infused with the fibre-reinforcement material. The first set of fixtures is adapted to restrict the motion of the first glue flange during the step of evacuating air, acting as stops during the step of evacuating air from the mould cavity, thereby providing the position references. The restriction (constraining) on the motion of the first glue flange results in the first glue flange being positioned correctly in a well-defined final position after the step of evacuating air from the mould cavity. As a result of the first glue flange being positioned correctly, the strength provided to the blade shell by the first glue flange is optimized. Furthermore, even though the first set of fixtures is included within the mould cavity, the arrangement of the vacuum bag is hardly affected compared to the case where a glue flange is not co-infused during manufacturing of the first blade shell part in the mould. The invention takes advantage of the fact that an upper part of the first glue flange (a free part of the first glue flange) can be further prepared, such as by cleaning or sanding, after manufacture of the first blade shell part. Thus, resin or other substances on the upper part of the first glue flange can be removed before assembling the two blade shell parts. The first blade shell part and the second blade shell part may for instance be a suction side and a pressure side of a wind turbine blade shell.

The number and shapes of the first set of fixtures are chosen such that the first glue flange does not change shape significantly during evacuation of air, as this would result in the first glue flange exerting a permanent strain on other components of the blade shell after manufacturing. The fixtures are typically position-specific and preferably follow the local contour of the first glue flange. This increases the area with which the first glue flange contacts the fixtures, which results in the lowest local pressure on the first glue flange, avoiding strain in the first glue flange.

In some embodiments, the first glue flange is shaped such that when the first blade shell part and the second blade shell part are assembled to form the blade shell, glue applied to a first side of the first glue flange will engage with an inner surface of the second blade shell part and thereby provide a bond between the first blade shell part and the second blade shell part. This bonds the first blade shell part to the second blade shell part. Preferably, all glue provided on the entire first surface engages with the inner surface of the second blade shell part. This provides the highest achievable bond strength.

In some embodiments, before the step of evacuating air from the mould cavity, the first glue flange is held in the first position against the first set of fixtures at least using one or more glue flange attachment means, such as an adhesive, such as a pressure-sensitive adhesive, that attaches the first glue flange to the first set of fixtures. In some embodiments, the adhesive is attached to the first glue flange and each of the fixtures, for instance wrapped over an upper edge of the first glue flange and an upper edge of each fixture, thereby holding the first glue flange temporarily onto the first set of fixtures. The adhesive may instead be provided in the form of a fibre material, such as fibre mat material, that is glued to the fixture, wrapped around the upper edge of the first glue flange and the upper edge of each fixture and glued to the first glue flange.

Other ways of temporarily holding the first glue flange may be used. For instance, the first glue flange can be held temporarily by the fixtures using wires, such as metal wires. Alternatively or additionally, fibre material, such as a fibre mat, may be glued to the first glue flange on a surface of the first glue flange that faces fibre-reinforcement material in the mould and the fibre mat may be attached to the first edge of the first blade mould indirectly, such as sown to other fibre-reinforcement material arranged on the first mould edge, or directly, such as being fixed to the first mould edge directly. This method has the advantage that it provides a strong hold on the first glue flange. Part of the fibre mat becomes integrated in the first blade shell part. If wires or pressure-sensitive adhesive is used for holding the first glue flange, these elements must be removed after manufacturing the blade shell part.

In some embodiments, the fibre-reinforcement material and the first glue flange are arranged such that during the step of evacuating air from the mould cavity, the first glue flange moves from the first position to a final position due at least in part to a force exerted on it by the vacuum bag during the step of evacuating air from the mould cavity and/or due at least in part to compression of the fibre-reinforcement material in the mould cavity during the step of evacuating air from the mould cavity. Such embodiments are even more advantageous since they allow more flexibility when arranging the fibre-reinforcement material and the first glue flange in the blade mould. The first set of fixtures restricts the motion of the glue flange such that the motion cannot continue beyond final position. In other words, the first set of fixtures prevents further motion of the glue flange when the glue flange is in the final position.

In some embodiments, the first set of fixtures comprises respective glue flange stops that face the first glue flange and define the position references for the first glue flange. Preferably, the glue flange stops are shaped to follow a contour of the first glue flange where the glue flange stops are in contact with the first glue flange. In particular, if the first glue flange moves from the first position to a final position different from the first position during the step of evacuating air from the mould cavity, the glue flange stops are preferably adapted to follow the contour of the first glue flange when the glue flange is in the final position. This at least reduces strain that might arise in case the first glue flange does flex due to pressure from the vacuum bag. The latter may cause the first glue flange to permanently exert a force within the blade shell, which is likely to reduce the lifetime of the blade shell.

In some embodiments, peel ply is positioned between the first glue flange and one or more of the first set of fixtures. Since the fixtures are included in the mould cavity, they are likely to receive resin during the step of providing resin into the mould cavity. The addition of peel ply between the fixtures and the first glue flange makes it is easier to separate the fixtures from the first glue flange after curing the resin, and it may reduce the amount of resin left behind on the first glue flange and/or the fixtures.

In some embodiments, the method further comprises, after the step of curing the resin, a step of removing the vacuum bag and detaching the first set of fixtures from the first glue flange. In some embodiments, the method further comprises a step of removing residual resin from the first glue flange, if required. Residue on the first glue flange may result in a weaker bond between the two blade shell parts.

The present invention is advantageously used both on the leading edge and the trailing edge of a blade shell part. Accordingly, in some embodiments, the method further comprises, before the step of providing the vacuum bag over the blade mould to form the mould cavity, steps of:
- providing a second set of one or more fixtures at corresponding one or more fixture positions along a second edge of the mould,
- arranging a second premanufactured glue flange in the blade mould using the second set of fixtures as position references, whereby the second glue flange is arranged in a second position relative to the blade mould.

This provides the advantages of the invention, described above, on both the leading-edge glue flange and the trailing-edge glue flange, including the precise positioning of the glue flanges and the easier layup and manufacture of the blade shell part by including the fixtures in the mould cavity.

In some embodiments, the method further comprises, after curing the resin and before assembling the first blade shell part and the second blade shell part:
- applying glue to a first side of the first glue flange and/or to an inner surface of the second blade shell part, and
- assembling the first blade shell part and the second blade shell part, whereby the first blade shell part and the second blade shell part are bonded to one another at least via the first glue flange.

Since the first glue flange has been positioned correctly, the above steps provide optimal bonding between the first blade shell part and the second blade shell part. If glue is provided on the inner surface of the second blade shell part, the glue is provided in a position that faces the first side of the first glue flange in order to provide bonding between the first glue flange and the second blade shell part.

In some embodiments where the method is applied both on a leading edge and on a trailing edge, the method further comprises, after curing the resin and before assembling the first blade shell part and the second blade shell part:
- also applying glue to a first side of the second glue flange and/or to an inner surface of the second blade shell part.

If glue is provided on the inner surface of the second blade shell part, the glue is provided in a position that faces the first side of the second glue flange in order to provide bonding between the second glue flange and the second blade shell part.

The methods above are applicable for different wind turbine blade elements that are provided in a mould as part of the manufacture of a wind turbine blade shell. In some embodiments, the first blade shell part is a suction side or a pressure side of a wind turbine blade shell part. In some embodiments, the first edge of the mould corresponds to a trailing edge of the first blade shell part. The trailing edge is typically more complicated and more difficult to work with and assemble than the leading edge, and the method is therefore particularly advantageous when used on the trailing edge.

The disclosure provides a system for manufacturing a wind turbine blade shell comprising a first wind turbine blade shell part and a second wind turbine blade shell part. The system comprises:
- a blade mould for forming the first blade shell part,
- a set of one or more fixtures attached at corresponding one or more positions along a first edge of the blade mould, the set of fixtures being configured to cooperate with a premanufactured glue flange to ensure that during manufacturing of the first blade shell part in the blade mould, a motion of the premanufactured glue flange is restricted by the set of fixtures such as to prevent a motion of the glue flange beyond a desired final position for the glue flange. In some embodiments, the system further comprises a vacuum bag arranged over the blade mould so as to form a mould cavity, wherein the mould cavity comprises the set of fixtures.

In some embodiments, the set of fixtures is reconfigurable, allowing the set of fixtures to be adapted to cooperate with premanufactured glue flanges of different shapes. This makes the system more flexible.

In some embodiments, the system comprises a second set of one or more fixtures that are attached at corresponding positions along a second edge of the blade mould and configured similarly to the set of fixtures on the first edge. This allows the system to be used to provide precise positioning of glue flanges both at a leading edge and at a trailing edge of the first blade shell part.

The disclosure provides also a composite wind turbine blade shell.

### Brief description of the drawings

The invention is explained in detail below with reference to the embodiments shown in the drawings.
Fig. 1 illustrates a wind turbine.
Fig. 2 illustrates a wind turbine blade.
Figs. 3a-3e illustrate a root end portion of a mould for manufacturing a first blade shell part of a wind turbine blade shell.
Figs. 4a-4j illustrate a method in accordance with the invention, in particular for manufacturing a wind turbine blade shell.
Figs. 5a-5f further illustrate the method illustrated in Figs. 4a-4j.

### Detailed description of selected embodiments

Embodiments of the invention will be described in more detail in the following with reference to the accompanying drawings. Like reference numerals may refer to like elements throughout. The drawings show selected ways of implementing the present invention and are not to be construed as limiting the scope of the claims. The features in the drawings are not necessarily drawn to scale.

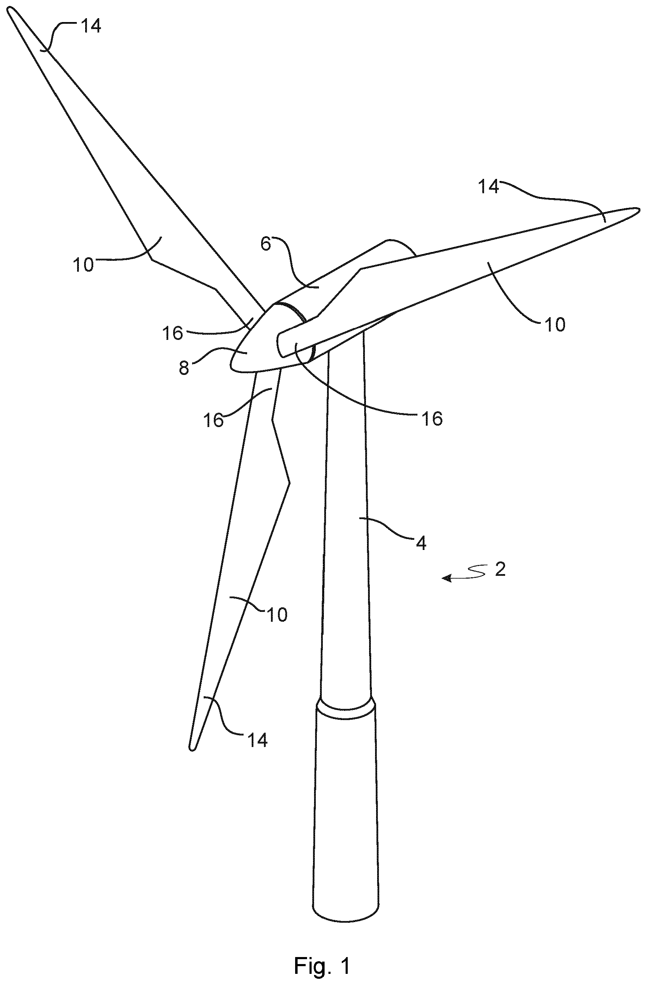

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8.

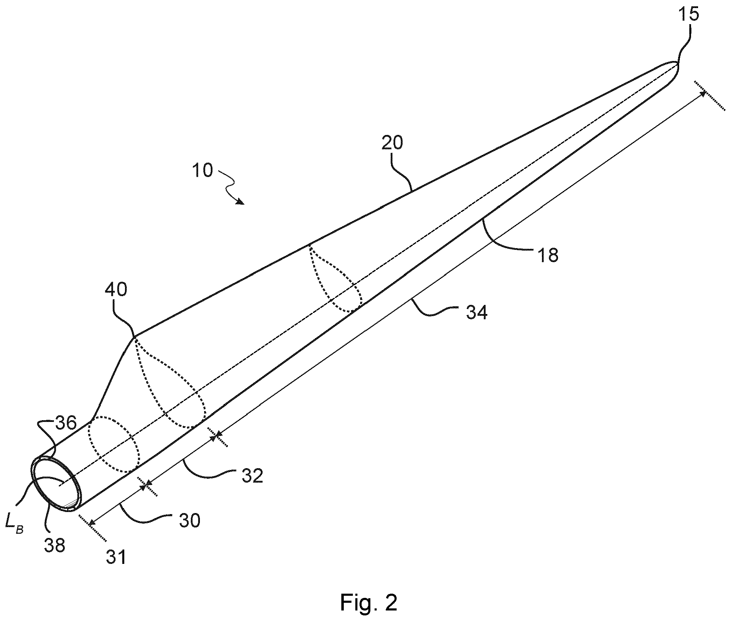

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18. The outermost point of the blade 10 is the tip end 15, located opposite the root end 31 that attaches to the wind turbine hub 8.

The airfoil region 34, also called the profiled region, of the wind turbine blade has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant or may vary along the root region 30. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord that extends between the leading edge 18 and the trailing edge 20 of the blade 10. The chord usually decreases with increasing distance from the hub.

A shoulder 40 of the blade 10 is defined as the position where the blade 10 has its largest chord length. The shoulder 40 is typically located at the boundary between the transition region 32 and the airfoil region 34. Fig. 2 also illustrates the longitudinal extent *L_{B}* of the blade 10. *L_{B}* also represents a longitudinal axis of the blade 10.

The blade is typically made from a pressure side shell part 36 and a suction side shell part 38 that are glued to each other along bond lines at the leading edge 18 and the trailing edge 20 of the blade 10. The bond lines are often supplemented by an internal glue flange, as also described above. The present invention addresses how to ensure that the glue joint provided by an internal glue flange provides as much structural strength to the blade as possible.

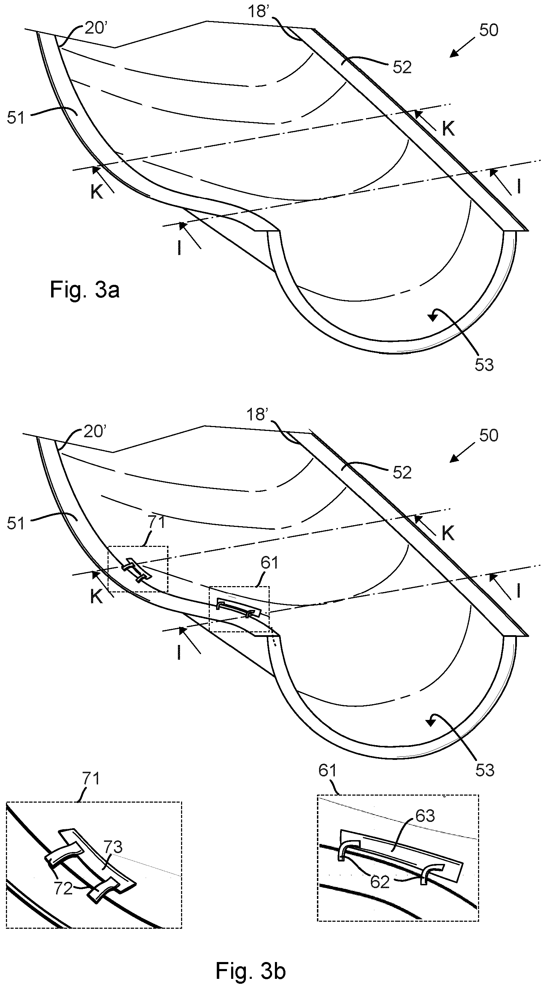

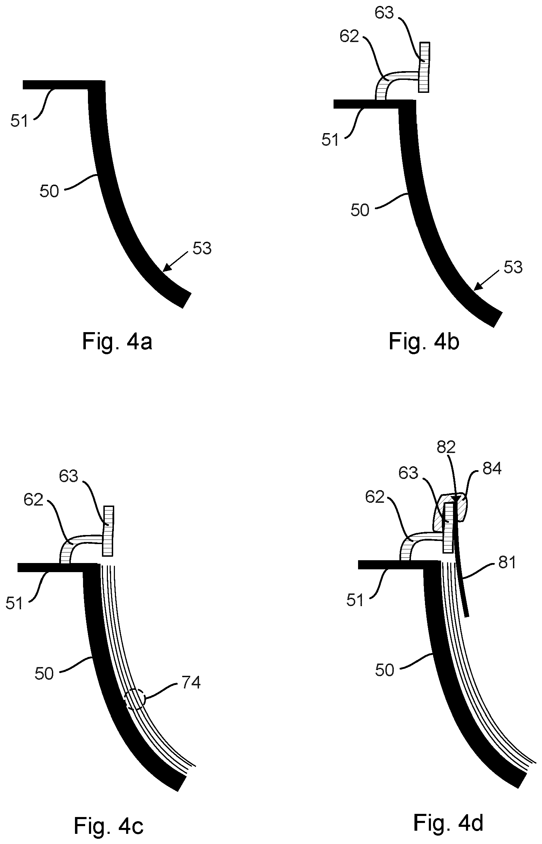

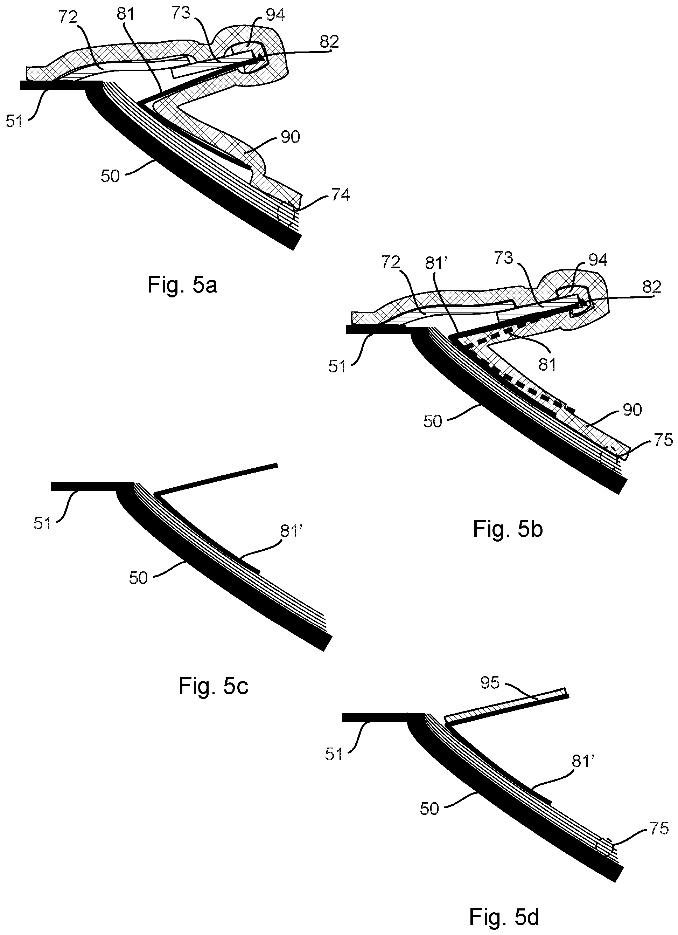

Figs. 3a-3e illustrate a method in accordance with the invention, for manufacturing a first wind turbine blade shell part. The method is further illustrated in Figs. 4a-4j and 5a-5f and associated description.

Fig. 3a illustrates a part of a blade mould 50 for use in manufacturing a suction side shell part 38 of a wind turbine blade. Fig. 3a shows parts of the mould near the root region 30, the transition region 32, and part of the airfoil region 34 of a blade (see Fig. 2). The blade mould 50 has a first edge 51 and a second edge 52 and a layup surface 53 for laying up fibre-reinforcement material such as fibre mats, spar caps, main laminates, shear web parts, core material etc., used in the manufacture of composite wind turbine blades. The edges 18', 20' of the mould surface 53 correspond to a leading edge 18 and a trailing edge 20, respectively, of the blade shell to be manufactured.

Fig. 3b illustrates two fixtures 61 and 71 having been attached to the first edge 51 of the mould shown in Fig. 3a. In the example, each of the fixtures 61 and 71 comprises a glue flange stop part 63, 73 and attachment means 62, 72 for rigidly attaching the glue flange stop part 63, 73 to the first edge 51 of the mould 50. To make the method robust, the glue flange stops 63, 73 and the attachment means 62, 72 are made such that they do not change shape when exposed to the pressure from a vacuum bag as air is evacuated from a mould cavity defined by the mould 50 and the vacuum bag. The stops 63, 73 and attachment means 62, 72 can for instance be made from composite material having a sufficient thickness or from metal, such as stainless steel or aluminium or equivalent material, having a sufficient thickness to not buckle from the pressure. The stops should be shaped such as to follow the contour of those portions of the glue flange with which they come into contact, as mentioned above.

The stops 63, 73 in Fig. 3b have been illustrated as being plate-like, and two stops are shown. This is a matter of design. The stops can be narrower or wider and each of the stops 63, 73 and its respective attachment means 62, 72 can be formed as a single piece rather than as separate pieces as Fig. 3b indicates. This is not essential. The number of the fixtures, the dimensions of the fixtures, and the shapes of the fixtures are chosen such that the shape of the glue flange does not change significantly during evacuation of air.

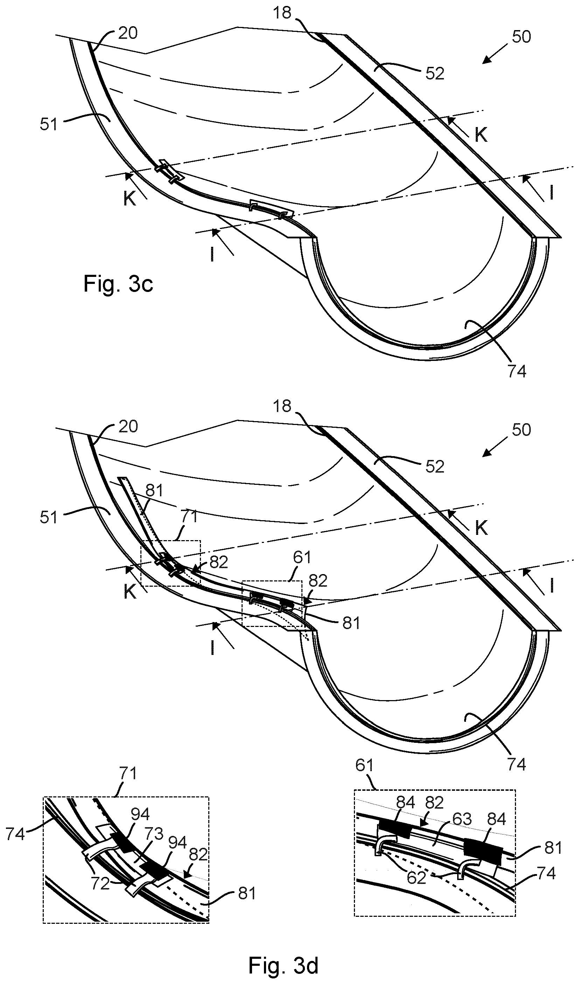

In a subsequent step, illustrated in Fig. 3c, fibre-reinforcement material 74 is added to the mould according to the specific design of the first blade shell part. The fibre-reinforcement material located at the transition from the mould surface 53 and the opposing mould edges 51, 52 define, respectively, the trailing edge 20 and the leading edge 18 of the blade shell, as indicated in Fig. 3c.

Resin is later added to the fibre-reinforcement material to form the fibre-reinforced first blade shell part.

After arranging the fibre-reinforcement material, the glue flange 81 is added to the layup as illustrated in Fig. 3d. The glue flange has a lower portion that will become part of the first blade shell part during manufacturing (not visible in this perspective, but indicated with dashed lines) and a portion that will later be bonded to the second blade shell part when assembling the blade shell parts to form the complete blade shell.

In the example illustrated in Fig. 3d, the glue flange 81 is held in a first position on the fibre-reinforcement material 74 by the fixtures 61, 71. In the example, and as illustrated in more detail in the lower part of Fig. 3d, adhesive 84 and 94 is wrapped around an upper edge 82 of the glue flange 81 to hold the glue flange temporarily onto the fixtures 61, 71, respectively. The adhesive may for instance be a pressure-sensitive adhesive, such as an adhesive tape. It may also be a fibre material, such as fibre mats, glued to the glue flange stops 63, 73 and wrapped around the upper edge 82 of the glue flange 81 and glued to the glue flange 81. The glue flange could also be held temporarily by the fixtures using wires. Alternatively or additionally, fibre material, such as a fibre mat, may be used as an attachment strip by being glued to the glue flange 81 on a surface that meets fibre material 74 in the mould, the attachment strip further being attached to the first edge 51 of the mould, directly or indirectly (such as sown to other fibre material arranged on the first mould edge or fixed to the first mould edge 51 directly). Such an attachment strip would become part of the first blade shell part during the resin infusion, whereas the other means described above would need to be removed.

The shape of the fixtures, especially the glue flange stops 63, 73 that meet the glue flange 81, should be shaped such that they follow the local contour of the glue flange 81. This provides the best final result, as it helps ensure that the glue flange is positioned correctly after evacuating air from the mould cavity and distributes the pressure on the glue flange 81 over a larger area. Furthermore, the number of stops and/or their position along the mould 50 should be such that the glue flange 81 is not allowed to flex when air is evacuated from the mould cavity, since glue flange flexing in the manufacturing process results in the glue flange 81 exerting a permanent force on the surrounding components after manufacturing of the blade shell part. The shape and number of fixtures are a matter of design and may depend for instance on the properties of the glue flange 81 and the blade shell part. A more flexible glue flange requires more glue flange stops than a more rigid glue flange.

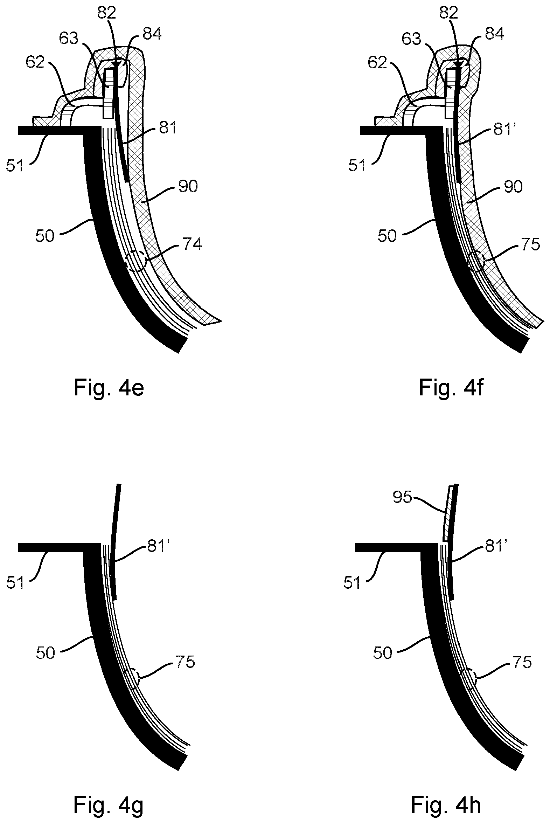

As shown in Fig. 3d, the glue flange stops 63, 73 substantially follow the contour of the glue flange 81. As described below, the glue flange 81 moves into a slightly different, final position, which is not visible in Fig. 3d. In the final position, the glue flange stops 63, 73 follow the contour of the glue flange 81. This is illustrated in Figs. 4e-4f and 5a-5b, which are described later on in this description.

Peel ply (not illustrated) can be added between the glue flange stops 63, 73 and the glue flange 81 to reduce or prevent adhesion between the glue flange stops 63, 73 and the glue flange 81, which will occur because the glue flange stops 63, 73 are actually, in accordance with the invention, co-infused with the glue flange 81. Arranging peel ply in this way makes it easier to separate the glue flange 81 from the glue flange stops 63, 73 after curing of the resin.

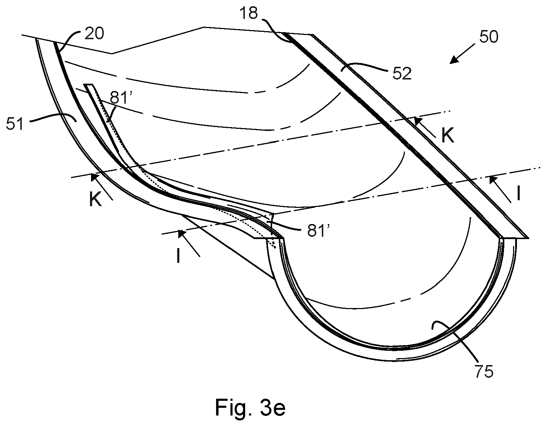

After the steps described above, a vacuum bag is added over the mould. This is illustrated and described later in this description. The vacuum bag is arranged such as to form a mould cavity that includes not only the fibre-reinforcement material 74 and the glue flange 81, but also the fixtures 61, 71, or at least part of the fixtures, such as the glue flange stops 63,73, if they can be embedded in the mould cavity without embedding the attachment means 62, 72 (for instance using tacky material to seal the vacuum bag in such a way that the attachment means 62, 72 are outside the mould cavity while the glue flange stops 63, 73 are inside the mould cavity). This means that the fixtures 61, 71 or at least the flue flange stops 63, 73 are infused with the glue flange. After adding the vacuum bag, the mould cavity is evacuated and resin is infused into the mould cavity and is allowed to cure. This turns the fibre-reinforcement material 74 into composite material 75 as indicated in Fig. 3e, and the glue flange 81 becomes attached on the fibre-reinforcement material 74 in the glue flange's final position, as indicated by reference 81' in Fig. 3e. The steps of adding the vacuum bag, evacuating air, infusing resin and curing the resin are not illustrated in Figs. 3a-3e, but they are illustrated in relation to Figs. 4a-4j and Figs. 5a-5f.

The result of the method above is shown in Fig. 3e. As described above, the glue flange 81 is in a final position 81' and is glued to the composite material 75. The final position 81' may differ from the first position in which the glue flange 81 was initially attached to the fixtures. This will be illustrated in more detail below.

Although the method described above causes the glue flange to become glued to the fixtures during curing of the resin infused into the mould cavity, the method results in easier and more precise positioning the glue flange 81, consistently.

As illustrated in Figs. 3b-3d, the different fixtures 61, 71 are typically shaped specifically for a certain position on the first mould edge 51 and a certain part of the glue flange 81, which is not uniform along its axis.

The fixtures are typically reusable for making a plurality of blades shell parts of the same type. The fixtures may need cleaning between manufacturing of blade shell parts, but this is a minor issue compared to the advantages provided by the invention, especially the high precision and relative ease with which the glue flange is positioned during the manufacturing.

By making the fixtures reconfigurable, the fixtures may be used for different blades and glue flanges. It must be ensured that the fixtures do not move or change posture during evacuation of air. Reconfigurable fixtures are not illustrated herein.

Figs. 4a-4j illustrate a part of the cross-section I-I indicated in Figs. 3a-3e during the process of manufacturing the first blade shell part.

Fig. 4a corresponds to Fig. 3a and illustrates part of the empty blade mould 50 near the trailing edge 20' at cross-section I-I indicated in Fig. 3a. Fig. 4a illustrates the first edge 51 of the mould and also a portion of the mould surface 53.

Fig. 4b illustrates arranging the fixture 61 as also shown in the corresponding Fig. 3b. The glue flange stop 63 faces into the mould 50 to meet and restrict the motion of the glue flange 81 as will be described in further detail below. In this example, and as also described in relation to Fig. 3b, the attachment means 62 rigidly attach the glue flange stop 63 to the mould edge 51, ensuring that the glue flange stop 63 remains securely in the same place during evacuation of air, which is a process that is known to exert substantial pressure.

Fig. 4c corresponds to Fig. 3c and illustrates the addition of fibre-reinforcement material 74 on the mould surface 53. For illustration purposes, the fibre-reinforcement material in the area of interest is shown as being a number of fibre mats 74, but it could additionally or alternatively be one or more other material types.

Fig. 4d corresponds to Fig. 3d and illustrates the addition of the glue flange 81 to the layup. As seen from Fig. 4d, the glue flange 81 is temporarily held onto the glue flange stop 63 by an adhesive material 84 as also described in detail in relation to Fig. 3d above. Fig. 4d illustrates the glue flange 81 in the first position in which it is in contact with the fibre mats 74. Thus, in this example, the fibre mats 74 partly define the first position of the glue flange 81. Since the glue flange 81 is not attached securely at this point, the glue flange 81 can move and thus the fibre mats 74 partly define the first position of the glue flange 81, i.e. the position that the glue flange 81 is in before the step of evacuating air from the mould cavity. As will be illustrated below, the glue flange typically shifts during evacuation of air.

Fig. 4e illustrates a vacuum bag 90 having been loosely arranged on top of the mould to form a mould cavity. As seen from Fig. 4e, not only the fibre mats 74 and the glue flange 81, but also the fixture 61 (comprising the attachment means 62 and the glue flange stop 63) is contained within the mould cavity, meaning that fixture 61 will receive resin during infusion, as also described above. The shape of the fixture, including the attachment means 62, should be adapted to minimize the amount of resin that ultimately embeds the fixture after infusion. Thus, the width of the attachment means 62 should be as small as possible, and it may be advantageous to ensure that the attachment means 62 are as close to the first edge 51 as possible, whereby the space created by the attachment means 62 is reduced. The glue flange stops should also be as narrow as possible, but this is subject to the constraint that the glue flange 81 must not flex when air is evacuated.

Fig. 4f illustrates the blade shell part after evacuation of air and infusion of resin into the mould cavity. The vacuum bag 90 is now snug and presses on the fibre layers 74 and on the glue flange 81 (and any other components in the mould cavity). Comparing Fig. 4f with Fig. 4e, it is seen that the fibre layers 74, which are now a composite 75, has a thickness that is smaller than the thickness before evacuation of air (see Fig. 4e). The evacuation of air causes the fibre mats to be compressed due to the pressure from the vacuum bag, which reduces the thickness of the fibre layers 74. As can also be seen when comparing Figs. 4e and 4f, the glue flange 81 is in a final position 81' that is different from the first position before evacuation of air from the mould cavity. The compression of the fibre mats 74 and the pressure from the vacuum bag force the glue flange closer to the mould surface.

Crucially, it is seen from Figs. 4e and 4f that the glue flange stop 63 allows motion of the glue flange during evacuation of air, but also restricts motion beyond the final (and desired) position, preventing further motion of the glue flange. Fig. 4e shows a space between a lower part of the glue flange stop 63 and the glue flange 81, whereas this space has been closed in during evacuation of air, as seen in Fig. 4f. The restriction of the motion of the glue flange 81 by the glue flange stop 63 helps ensure the precise positioning of the glue flange 81 in the desired final position 81', if different from the first position.

Fig. 4g shows the final product after removal of the vacuum bag 90, the adhesive 84, and the fixture 61 (comprising attachment means 62 and glue flange stop 63). As described above, the glue flange 81' is in the desired position by virtue of the invention.

Fig. 4h illustrates the addition of glue 95 on a first surface of the glue flange 81' (the glue flange 81 in the final position). The first surface will face the second blade shell part that, together with the first blade shell part, forms the wind turbine blade shell. It may be necessary to prepare the first surface of the glue flange 81' before adding the glue 95, as this surface has been in contact with the glue flange stop 63 and might have resin residue on it after the fixture 61 is removed. Such residue may result in an inferior bond between the glue flange 81' and the glue 95, which is not acceptable.

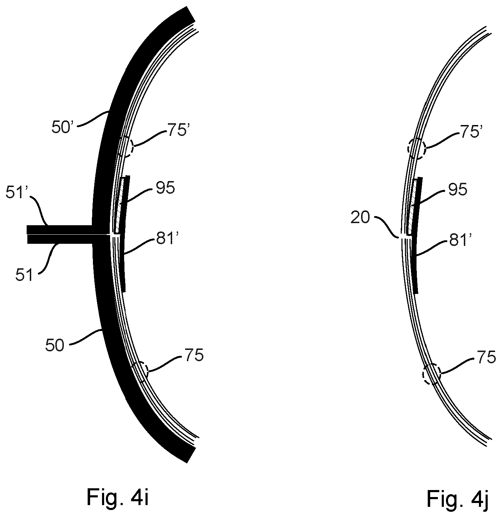

Fig. 4i illustrates a second blade mould 50' holding the second blade shell part. The second blade mould 50' is arranged above the first blade mould 50. The first edge 51 of the first mould 50 meets a first edge 51' of the second mould 50'. This is a normal step in assembling blade shell parts to form a complete blade shell. The second blade shell part in this example comprises composite material 75' similar to the composite material 75 in the first blade shell part.

When the moulds 50 and 50' are close to one another, the glue flange 81' is glued to the composite 75' in the second blade shell part by the glue 95, whereby a strong bond is created between the two shell parts. In accordance with the advantages of the invention, the glue flange 81' is positioned as intended and will thus meet the second blade shell part in an equally precise manner, resulting in the bond being strong.

Fig. 4j illustrates the resulting assembled blade shell parts (still only near the trailing edge 20 of the wind turbine blade shell, which is the relevant portion). Additional elements may be used for gluing the blade shell parts together, such as a glue bond bonding the composites 75 and 75' together at the position where they meet at the trailing edge 20.

Figs. 5a-5f illustrate use of a further fixture 71 further up the blade mould 50 in the direction of the tip of the blade to be manufactured, as also indicated in Figs. 3b-3d. As is typically the case, a single glue flange is used in this example, so the glue flange 81 shown in Figs. 5a-5f is the same glue flange as that shown in Figs. 3d-3e and 4d-4h. Thus, the same reference numerals 81 and 81' are used in the following. The view in Figs. 5a-5f corresponds to cross-section K-K indicated in Figs. 3a-3e.

Fig. 5a illustrates the step corresponding to Fig. 4e where the vacuum bag has been loosely arranged over the mould 50 but the mould cavity has not yet been evacuated. Similarly to Fig. 4e, the glue flange 81 is held onto a glue flange stop, in this case glue flange stop 73 of the fixture 71 shown in Figs. 3b-3d (including the bottom left-most detail of Fig. 3d). The glue flange stop 73 is attached to the first mould edge 51 by attachment means 72. As described above and as shown in Figs. 3b-3d, the fixture 71 has a different shape compared to the fixture 61 as described in relation to Figs. 4a-4f. Similarly to Fig. 4e, there is a gap between part of the glue flange 81 and the glue flange stop 73 before evacuation of air from the mould cavity.

As discussed in relation to Figs. 3d and 4d, the glue flange 81 is initially held in a first position when added to the layup and before air is evacuated. The first position at cross-section I-I is illustrated in Fig. 4d. Similarly, Fig. 5a illustrates the glue flange 81 in the first position at the cross-section K-K. The glue flange has a different cross-sectional shape at cross-section K-K due to the shape of the airfoil of the blade at cross-section K-K being different from the shape of the airfoil at cross-section I-I, the latter being close to the root and thus having a shape that is quite close to circular, as seen for instance from Figs. 3a-3e and Figs. 4i-4j. Similarly to Fig. 4e, the glue flange 81 is attached to the glue flange stop 73 by an adhesive 94, such as a pressure-sensitive adhesive, adhesive tape, or a fibre material glued to the glue flange stop 73 and the glue flange 81. At cross-section K-K, the glue flange rests on fibre mats 74 which, for simplicity, are illustrated as being the same fibre mats as those laid up at cross-section I-I as shown e.g. in Figs. 3d and 4c.

Similarly to Fig. 4f, Fig. 5b illustrates the blade shell part after evacuation of air and infusion of resin into the mould cavity. Again, the vacuum bag is snug and presses on the fibre layers 74 and the glue flange. The fibre layers 74 have been compressed, and resin has been infused into the mould cavity which has turned the fibre layers into a composite 75. Fig. 5b also illustrates that the glue flange 81 has moved from the first position to a second position 81' due to the pressure from the vacuum bag and the compression of the fibre layers 74. The first position 81, shown in Fig. 5a, is illustrated by a dashed line in Fig. 5b. Similarly to glue flange stop 63 in Fig. 4f, the glue flange stop 73 at cross-section K-K has allowed the glue flange 81 to move from the first position to the final position 81', closing the gap described in relation to Fig. 5a, but the glue flange stop 73 has also restricted further motion of the glue flange 81. As a result, the glue flange 81' is correctly positioned, i.e. as desired, also at cross-section K-K. As described above, the fixtures are provided along the mould in such a way that the glue flange 81 is not allowed to flex significantly when air is evacuated from the mould cavity. The fixtures described above are merely exemplary. Narrower or wider glue flange stops can be used, and the number of glue flange stops are selected to ensure that the glue flange 81 does not flex.

Fig. 5c illustrates the blade shell part in the mould after the infused resin has cured and the vacuum bag 90 and the fixture 71 have been removed. In preparation for gluing the glue flange 81' to a second blade shell part, it may be necessary to clean the surface of the glue flange 81' where it has been in contact with the glue flange stop 73 or other places where resin has reached the glue flange 81' during infusion of resin.

Fig. 5d illustrates the glue 95 provided along the glue flange 81' in preparation for assembling the blade shell part with a second blade shell part. As described in relation to Fig. 4h, the glue 95 is applied to a first surface of the glue flange that will face the second blade shell part when the blade shell parts are assembled.

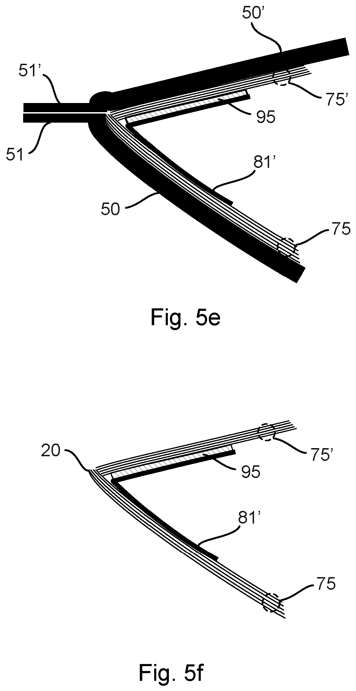

Fig. 5e corresponds to Fig. 4i and illustrates the point where the second mould 50' with the second blade shell part in it is arranged above the first blade mould 50 and the second blade shell part comes into contact with the glue 95, whereby the shell parts are bonded to one another via the glue flange 81', which therefore provides additional strength to the blade shell. In this example, as is typically the case, it is the same blade mould 50' as that at cross-section I-I, and as mentioned above, the glue flange is also typically the same as that at cross-section I-I, since only a single glue flange is normally used in a blade shell. However, the invention is not limited to use with a single glue flange, but rather is readily applicable also if several glue flanges parts are used in the blade shell.

Fig. 5f illustrates the resulting trailing edge portion of the blade shell at the cross-section K-K, the glue flange 81' providing structural strength to the blade shell.

The description above has focused on the trailing edge. However, a leading-edge glue flange for the leading edge 18 of the blade shell can also be provided, and it can be provided as part of the method described above for the trailing-edge glue flange 81. Accordingly, fixtures are arranged on the second edge 52 of the mould (the second edge 52 is illustrated for instance in Fig. 3d). The shape and number of fixtures are adapted to the shape of the leading-edge glue flange in order to support the leading-edge glue flange during evacuation of air to prevent flexing. The description above in relation to the trailing-edge glue flange applies equally to the attachment of the leading-edge glue flange.

### List of references

- 2: wind turbine
- 4: tower
- 6: nacelle
- 8: hub
- 10: blade
- 11,12: blade shell part
- 14: blade tip
- 15: tip end
- 16: blade root
- 18: leading edge of blade shell part
- 18': blade mould leading edge
- 20: trailing edge of blade shell part
- 20': blade mould trailing edge
- 30: root region
- 31: root end
- 32: transition region
- 34: airfoil region
- 36: pressure side shell part
- 38: suction side shell part
- 40: blade shoulder
- 50: blade mould for first wind turbine blade shell part
- 50': blade mould for second wind turbine blade shell part
- 51: first edge of blade mould
- 52: second edge of blade mould
- 53: blade mould layup surface
- 61,71: fixtures
- 62,72: attachment means for glue flange stops
- 63,73: glue flange stops
- 74: fibre-reinforcement material, fibre mats
- 75: composite material
- 81: glue flange/first position of glue flange
- 81': final position of glue flange
- 82: glue flange upper edge
- 84, 94: adhesive for holding glue flange

## Claims

1. A method of manufacturing a wind turbine blade shell comprising a first wind turbine blade shell part (36) and a second wind turbine blade shell part (38), the method comprising:
- providing a blade mould (50) for forming the first blade shell part,
- arranging fibre-reinforcement material (74) into the blade mould,
- providing a first set of one or more fixtures (61, 71) at corresponding one or more fixture positions along a first edge (51) of the blade mould,
- arranging a first premanufactured glue flange (81) in the blade mould using the first set of fixtures as position references, whereby the first glue flange is arranged in a first position relative to the blade mould,
- providing a vacuum bag over the blade mould so as to form a mould cavity, wherein the fibre-reinforcement material, the first glue flange, and the first set of fixtures are contained within the mould cavity,
- evacuating air from the mould cavity,
- providing resin into the mould cavity, and
- curing the resin, thereby forming the first blade shell part.

2. A method in accordance with claim 1, wherein the first glue flange is shaped such that when the first blade shell part and the second blade shell part are assembled with one another to form the blade shell, glue applied to a first side of the first glue flange will engage with an inner surface of the second blade shell part and thereby provide a bond between the first blade shell part and the second blade shell part.

3. A method in accordance with any of the preceding claims, wherein before the step of evacuating air from the mould cavity, the first glue flange is held in the first position against the first set of fixtures at least by one or more glue flange attachment means (84), such as by an adhesive, such as a pressure-sensitive adhesive, that attaches the first glue flange to the first set of fixtures.

4. A method in accordance with any of the preceding claims, wherein the first set of fixtures (61, 71) comprises respective glue flange stops (63, 73) that define the position references for the first glue flange.

5. A method in accordance with any of the preceding claims, wherein the fibre-reinforcement material and the first glue flange are arranged such that during the step of evacuating air from the mould cavity, the first glue flange moves from the first position (81) to a final position (81') due at least in part to a force exerted by the vacuum bag during the step of evacuating air from the mould cavity and/or due at least in part to compression of the fibre-reinforcement material in the mould cavity during the step of evacuating air from the mould cavity.

6. A method in accordance with any of the preceding claims, wherein peel ply is positioned between the first glue flange and one or more of the first set of fixtures.

7. A method in accordance with any of the preceding claims, further comprising, after the step of curing the resin, removing the vacuum bag and detaching the first set of fixtures from the first glue flange.

8. A method in accordance with any of the preceding claims, further comprising, before the step of providing the vacuum bag over the blade mould to form the mould cavity:
- providing a second set of one or more fixtures at corresponding one or more fixture positions along a second edge (52) of the mould,
- arranging a second premanufactured glue flange in the blade mould using the second set of fixtures as position references, whereby the second glue flange is arranged in a second position relative to the blade mould.

9. A method in accordance with any of the preceding claims, further comprising, after curing the resin and before assembling the first blade shell part and the second blade shell part:
- applying glue to a first side of the first glue flange and/or to an inner surface of the second blade shell part, and
- assembling the first blade shell part and the second blade shell part, whereby the first blade shell part and the second blade shell part are bonded to one another at least via the first glue flange, thereby forming the blade shell.

10. A method in accordance with claim 9 as dependent on claim 8, further comprising, after curing the resin and before assembling the first blade shell part and the second blade shell part:
- applying glue to a first side of the second glue flange and/or to an inner surface of the second blade shell part.

11. A method in accordance with any of the preceding claims, wherein the first edge (51) corresponds to a trailing edge (20) of a suction side (38) or of a pressure side (36) of a wind turbine blade shell part.

## Patentansprüche

1. Verfahren zum Herstellen einer Windkraftschaufelschale, umfassend ein erstes Windkraftschaufelschalenteil (36) und ein zweites Windkraftschaufelschalenteil (38), wobei das Verfahren umfasst:
- Bereitstellen einer Schaufelform (50) zum Formen des ersten Schaufelschalenteils,
- Anordnen von Faserverstärkungsmaterial (74) in der Schaufelform,
- Bereitstellen eines ersten Satzes von einer oder mehreren Befestigungen (61, 71) an entsprechend einer oder mehreren Positionen für die Befestigungen entlang einer ersten Kante (51) der Schaufelform,
- Anordnen eines ersten vorgefertigten Klebeflansches (81) in der Schaufelform unter Verwendung von dem ersten Satz von Befestigungen als Positionsreferenzen, wobei der erste Klebeflansch in einer ersten Position relativ zu der Schaufelform angeordnet wird,
- Bereitstellen eines Vakuumbeutels über der Schaufelform, sodass ein Formhohlraum gebildet wird, wobei das Faserverstärkungsmaterial, der erste Klebeflansch und der erste Satz von Befestigungen innerhalb des Formhohlraums enthalten sind,
- Evakuieren von Luft aus dem Formhohlraum,
- Bereitstellen von Harz in den Formhohlraum, und
- Härten des Harzes, wodurch das erste Schaufelschalenteil gebildet wird.

2. Verfahren nach Anspruch 1, wobei der erste Klebeflansch so geformt ist, dass, wenn das erste Schaufelschalenteil und das zweite Schaufelschalenteil miteinander zusammengefügt werden, um die Schaufelschale zu bilden, auf eine erste Seite des ersten Klebeflansches aufgebrachter Klebstoff mit einer Innenfläche des zweiten Schaufelschalenteils in Eingriff kommt und dadurch eine Verbindung zwischen dem ersten Schaufelschalenteil und dem zweiten Schaufelschalenteil bereitstellt.

3. Verfahren nach einem der vorstehenden Ansprüche, wobei vor dem Schritt des Evakuierens von Luft aus dem Formhohlraum der erste Klebeflansch in der ersten Position gegen den ersten Satz von Befestigungen zumindest durch ein oder mehrere Befestigungsmittel für den Klebeflansch (84) gehalten wird, wie etwa durch einen Klebstoff, wie etwa einen druckempfindlichen Klebstoff, der den ersten Klebeflansch an dem ersten Satz von Befestigungen befestigt.

4. Verfahren nach einem der vorstehenden Ansprüche, wobei der erste Satz von Befestigungen (61, 71) jeweilige Klebeflanschanschläge (63, 73) umfasst, die die Positionsreferenzen für den ersten Klebeflansch definieren.

5. Verfahren nach einem der vorstehenden Ansprüche, wobei das Faserverstärkungsmaterial und der erste Klebeflansch so angeordnet werden, dass während des Schritts des Evakuierens von Luft aus dem Formhohlraum sich der erste Klebeflansch von der ersten Position (81) zu einer Endposition (81') bewegt, zumindest teilweise aufgrund einer durch den Vakuumbeutel während des Schritts des Evakuierens von Luft aus dem Formhohlraum ausgeübten Kraft und/oder zumindest teilweise aufgrund einer Kompression des Faserverstärkungsmaterials in dem Formhohlraum während des Schritts des Evakuierens von Luft aus dem Formhohlraum.

6. Verfahren nach einem der vorstehenden Ansprüche, wobei Abreißgewebe zwischen dem ersten Klebeflansch und einer oder mehreren des ersten Satzes von Befestigungen positioniert ist.

7. Verfahren nach einem der vorstehenden Ansprüche, weiter umfassend, nach dem Schritt des Härtens des Harzes, das Entfernen des Vakuumbeutels und das Lösen des ersten Satzes von Befestigungen von dem ersten Klebeflansch.

8. Verfahren nach einem der vorstehenden Ansprüche, weiter umfassend vor dem Schritt des Bereitstellens des Vakuumbeutels über der Schaufelform zum Bilden des Formhohlraums:
- Bereitstellen eines zweiten Satzes von einer oder mehreren Befestigungen an entsprechend einer oder mehreren Positionen für die Befestigungen entlang einer zweiten Kante (52) der Form,
- Anordnen eines zweiten vorgefertigten Klebeflansches in der Schaufelform unter Verwendung des zweiten Satzes von Befestigungen als Positionsreferenzen, wobei der zweite Klebeflansch in einer zweiten Position relativ zu der Schaufelform angeordnet wird.

9. Verfahren nach einem der vorstehenden Ansprüche, weiter umfassend nach dem Härten des Harzes und vor dem Zusammenfügen des ersten Schaufelschalenteils und des zweiten Schaufelschalenteils:
- Aufbringen von Klebstoff auf eine erste Seite des ersten Klebeflansches und/oder auf eine Innenfläche des zweiten Schaufelschalenteils, und
- Zusammenfügen des ersten Schaufelschalenteils und des zweiten Schaufelschalenteils, wobei das erste Schaufelschalenteil und das zweite Schaufelschalenteil zumindest über den ersten Klebeflansch miteinander verbunden werden, wodurch die Schaufelschale gebildet wird.

10. Verfahren nach Anspruch 9, abhängig von Anspruch 8, weiter umfassend nach dem Härten des Harzes und vor dem Zusammenfügen des ersten Schaufelschalenteils und des zweiten Schaufelschalenteils:
- Aufbringen von Klebstoff auf eine erste Seite des zweiten Klebeflansches und/oder auf eine Innenfläche des zweiten Schaufelschalenteils.

11. Verfahren nach einem der vorstehenden Ansprüche, wobei die erste Kante (51) einer Hinterkante (20) einer Saugseite (38) oder einer Druckseite (36) eines Schaufelschalenteils einer Windkraftschaufel entspricht.

## Revendications

1. Procédé de fabrication d'une coque de pale d'éolienne comprenant une première partie (36) de coque de pale d'éolienne et une deuxième partie (38) de coque de pale d'éolienne, le procédé comprenant :
- la fourniture d'un moule de pale (50) pour former la première partie de coque de pale,
- la disposition d'un matériau (74) de renforcement fibreux dans le moule de pale,
- la fourniture d'un premier ensemble d'un ou de plusieurs éléments de fixation (61, 71) à une ou plusieurs positions de fixation correspondantes le long d'un premier bord (51) du moule de pale,
- la disposition d'une première bride adhésive préfabriquée (81) dans le moule de pale en utilisant le premier ensemble d'éléments de fixation comme références de positionnement, de telle sorte que la première bride adhésive est disposée dans une première position par rapport au moule de pale,
- la fourniture d'une poche à vide sur le moule de pale de manière à former une cavité du moule, dans lequel le matériau de renforcement fibreux, la première bride adhésive et le premier ensemble d'éléments de fixation sont contenus dans la cavité du moule,
- l'évacuation de l'air de la cavité du moule,
- la fourniture de résine dans la cavité du moule, et
- le durcissement de la résine, formant ainsi la première partie de coque de pale.

2. Procédé selon la revendication 1, dans lequel la première bride adhésive est façonnée de sorte que lorsque la première partie de coque de pale et la deuxième partie de coque de pale sont assemblées l'une avec l'autre pour former la coque de pale, de la colle appliquée sur un premier côté de la première bride adhésive viendra en prise avec une surface interne de la deuxième partie de coque de pale et fournira ainsi une liaison entre la première partie de coque de pale et la deuxième partie de coque de pale.

3. Procédé selon l'une quelconque des revendications précédentes, dans lequel, avant l'étape d'évacuation de l'air de la cavité du moule, la première bride adhésive est maintenue dans la première position contre le premier ensemble d'éléments de fixation au moins par un ou plusieurs moyens (84) de fixation de bride adhésive, tels que par un adhésif, tel qu'un adhésif sensible à la pression, qui fixe la première bride adhésive au premier ensemble d'éléments de fixation.

4. Procédé selon l'une quelconque des revendications précédentes, dans lequel le premier ensemble d'éléments de fixation (61, 71) comprend des butées (63, 73) de bride adhésive respectives qui définissent les références de positionnement pour la première bride adhésive.

5. Procédé selon l'une quelconque des revendications précédentes, dans lequel le matériau de renforcement fibreux et la première bride adhésive sont disposés de sorte que pendant l'étape d'évacuation de l'air de la cavité du moule, la première bride adhésive se déplace de la première position (81) vers une position finale (81') en raison au moins en partie d'une force exercée par la poche à vide pendant l'étape d'évacuation de l'air de la cavité du moule et/ou en raison au moins en partie d'une compression du matériau de renforcement fibreux dans la cavité du moule pendant l'étape d'évacuation de l'air de la cavité du moule.

6. Procédé selon l'une quelconque des revendications précédentes, dans lequel un tissu d'arrachage est positionné entre la première bride adhésive et un ou plusieurs éléments du premier ensemble d'éléments de fixation.

7. Procédé selon l'une quelconque des revendications précédentes, comprenant en outre, après l'étape de durcissement de la résine, le retrait de la poche de vide et le détachement du premier ensemble d'éléments de fixation de la première bride adhésive.

8. Procédé selon l'une quelconque des revendications précédentes, comprenant en outre, avant l'étape de fourniture de la poche sous vide sur le moule de pale pour former la cavité du moule :
- la fourniture d'un deuxième ensemble d'un ou de plusieurs éléments de fixation à une ou plusieurs positions de fixation correspondantes le long d'un deuxième bord (52) du moule,
- la disposition d'une deuxième bride adhésive préfabriquée dans le moule de pale en utilisant le deuxième ensemble d'éléments de fixation comme références de positionnement, de telle sorte que la deuxième bride adhésive est disposée dans une deuxième position par rapport au moule de pale.

9. Procédé selon l'une quelconque des revendications précédentes, comprenant en outre, après le durcissement de la résine et avant l'assemblage de la première partie de coque de pale et de la deuxième partie de coque de pale :
- l'application de colle sur un premier côté de la première bride adhésive et/ou sur une surface interne de la deuxième partie de coque de pale, et
- l'assemblage de la première partie de coque de pale et la deuxième partie de coque de pale, de telle sorte que la première partie de coque de pale et la deuxième partie de coque de pale sont liées l'une à l'autre au moins par l'intermédiaire de la première bride adhésive, formant ainsi la coque de pale.

10. Procédé selon la revendication 9 dépendante de la revendication 8, comprenant en outre, après le durcissement de la résine et avant l'assemblage de la première partie de coque de pale et de la deuxième partie de coque de pale :
- l'application de colle sur un premier côté de la deuxième bride adhésive et/ou sur une surface interne de la deuxième partie de coque de pale.

11. Procédé selon l'une quelconque des revendications précédentes, dans lequel le premier bord (51) correspond à un bord de fuite (20) d'un côté aspiration (38) ou d'un côté pression (36) d'une partie de coque de pale d'éolienne.
